# EUROPÄISCHE PATENTSCHRIFT

(11) **EP 4 049 883 B1**
(45) Veröffentlichungstag und Bekanntmachung des Hinweises auf die Patenterteilung: **08.03.2023**
(21) Anmeldenummer: 22156259.8
(22) Anmeldetag: 11.02.2022
(51) Int. Cl.: B60L 5/08, B60L 55/00, B60L 5/12, B60L 5/38

(54) **VERFAHREN ZUR HERSTELLUNG EINES STROMABNEHMERKOPFES UND STROMABNEHMERKOPF**
CURRENT COLLECTOR HEAD AND METHOD FOR PRODUCING A CURRENT COLLECTOR HEAD
PROCÉDÉ DE FABRICATION D'UNE TÊTE DE PANTOGRAPHE ET TÊTE DE PANTOGRAPHE

(30) Priorität: 26.02.2021 DE 102021104704
(43) Veröffentlichungstag der Anmeldung: 31.08.2022
(73) Patentinhaber: Conductix-Wampfler GmbH, 79576 Weil am Rhein (DE)
(72) Erfinder: Gerwig, Max, 79400 Kandern (DE)
(74) Vertreter: Charrier Rapp & Liebau

(56) Entgegenhaltungen:
- DE-A1- 3 821 255
- DE-A1-102018 125 467
- DE-B4- 19 847 975

## Beschreibung

Die Erfindung betrifft ein Verfahren zur Herstellung eines Stromabnehmerkopfes für einen Stromabnehmer nach dem Oberbegriff des Anspruchs 1 sowie einen Stromabnehmer nach dem Oberbegriff des Anspruchs 14.

Ein solcher Stromabnehmerkopf besteht aus einem Schleifstück aus elektrisch leitfähigem Material, welches im Betrieb des Stromabnehmers in schleifendem Kontakt mit einer Stromschiene entlang der Schleifleitung bewegt wird, und einem Schleifstückhalter aus elektrisch isolierendem Material, in dem das Schleifstück aufgenommen ist, und welches eine mechanische Verbindung zu anderen Komponenten des Stromabnehmers herstellt, von denen das Schleifstück elektrisch isoliert sein muss. Die elektrische Kontaktierung des Schleifstücks erfolgt über ein Kabel, das durch eine Steckverbindung im Inneren des Schleifstückhalters mit dem Schleifstück verbunden ist. Wenn das Schleifstück verschlissen ist, wird der Stromabnehmerkopf insgesamt ausgetauscht. Die Verwendung eines solchen Stromabnehmerkopfes ist bei Stromabnehmern von Schleifleitungssystemen bekannt.

Um das Schleifstück in schleifendem Kontakt mit einer Stromschiene der Schleifleitung zu halten, wird der Schleifstückhalter durch eine Federanordnung des Stromabnehmers mit einer definierten Kraft in Richtung der Stromschiene beaufschlagt. Beim Ausfahren des Stromabnehmers aus einer Schleifleitung, wie es insbesondere bei Schleifleitungssystemen in Sortieranlagen häufig vorkommt, wird der Stromabnehmerkopf infolge des Wegfalls der Gegenkraft der Stromschiene durch die Federanordnung des Stromabnehmers gegen einen mechanischen Anschlag bewegt, der diese Bewegung abrupt stoppt. Daraus ergibt sich das Problem, dass ein in die Aufnahme des Schleifstückhalters eingestecktes und dort durch Reibung gehaltenes Schleifstück aus der Aufnahme herausfallen kann, wenn die durch das Anschlagen verursachte Trägheitskraft des Schleifstücks die Reibungskraft überschreitet. Ein solches Herausfallen eines Schleifstücks aus dem Schleifstückhalter bedeutet einen Ausfall des betroffenen Stromabnehmers und damit des gesamten Schleifleitungssystems.

Die DE 38 21 255 A1 betrifft ein Schleifstück für Stromabnehmer mit einer Kohleleiste und ein diese abstützenden Träger, wobei der Träger mindestens in dem an die Kohleleiste angrenzenden Querschnittsbereich aus Kunststoff, insbesondere faserverstärktem und/oder geschäumtem Kunststoff besteht. Die Verbindung des Trägers mit der Kohleleiste kann, wie üblich, durch Kleben, oder aber vorzugsweise durch direktes Anformen des Kunststoffs an die Kohleleiste erfolgen.

Die DE 90 04 828 U1 betrifft einen Stromabnehmer für Schleifleitungen, der ein Basisteil auf weist, an dem ein Arm angelenkt ist, der den Schleifkontaktträger trägt. Das Basisteil ist mit einer schlitzartigen Ausnehmung versehen, deren Ebene in der Ebene verläuft, die durch die Längsachse des Arms und einer ersten Schwenkachse des Arms gebildet wird. Diese Ausnehmung ist durch ein Wandungsteil begrenzt, das zur Ausnehmung hin eine Kalotte aufweist, in die ein balliger Vorsprung des Arms eingreift. Zwischen dem Basisteil und dem Arm ist eine Feder angeordnet, die den Vorsprung in Eingriff mit der Kalotte hält. Damit ist der Arm entgegen der Federkraft um die Schwenkachse und in der Ebene der Ausnehmung schwenkbar.

Die DE 10 2018 005 878 A1 betrifft die Verwendung eines mehrlagigen Schichtaufbaus für ein Element zur Verwendung als ein Boden-, Wand-, Decken-, Möbel-, Dekorations-, Innenausbauelement, vorzugsweise Leisten-, Profil-, Kanten-, Tür- und/oder Fensterelement, Fassaden-, Tapeten-, Car-Interior-, Car-Exterior- und/oder Outdoorbelagselement mit wenigstens einer biopolymerhaltigen und/oder biopolymeren Schicht und wenigstens einer Dekorschicht.

Der Erfindung liegt daher die Aufgabe zugrunde, bei einem Stromabnehmerkopf für einen Stromabnehmer das Herausfallen des Schleifstücks aus dem Schleifstückhalter bei abrupten Bewegungen des Stromabnehmerkopfes zu vermeiden.

Diese Aufgabe wird erfindungsgemäß durch ein Verfahren mit den Merkmalen des Anspruchs 1 und durch einen Stromabnehmerkopf mit den Merkmalen des Anspruchs 14 gelöst. Vorteilhafte Ausgestaltungen sind in den Unteransprüchen angegeben.

Erfindungsgemäß sind bei einem Verfahren zur Herstellung eines aus einem elektrisch leitfähigen Schleifstück und einem elektrisch isolierenden Schleifstückhalter bestehenden Stromabnehmerkopfes für einen Stromabnehmer folgende Schritte vorgesehen:
a) Einführen eines Abschnitts des Schleifstücks in einen passend zu diesem Abschnitt dimensionierten, nach außen offenen Hohlraum in dem Schleifstückhalter;
b) Klemmen des Schleifstücks in dem Hohlraum des Schleifstückhalters durch Beaufschlagung des Schleifstückhalters mit mindestens einer auf den eingeführten Abschnitt des Schleifstücks gerichteten äußeren Kraft;
c) Erwärmen des Schleifstücks auf eine zur Entstehung einer stoffschlüssigen Verbindung mit dem Schleifstückhalter ausreichende Temperatur;
d) Abkühlen des aus Schleifstück und Schleifstückhalter gebildeten Stromabnehmerkopfes.

Im Vergleich zu anderen in Frage kommenden Verfahren hat diese Art der Herstellung eines Stromabnehmerkopfes entscheidende Vorteile. Sie ist weniger aufwändig als die Herstellung einer formschlüssigen mechanischen Verbindung, beispielsweise in Form von Stiften, die durch miteinander fluchtende Querbohrungen in dem Schleifstück und dem Schleifstückhalter geführt und dort fixiert würden. Insbesondere sind im Vergleich zu einer solchen mechanischen Verbindung keine zusätzlichen Komponenten nötig. Sie ist reproduzierbarer und zuverlässiger als eine Klebeverbindung mit manueller Auftragung des Klebstoffs und weniger aufwändig als eine Klebeverbindung mit automatischer Auftragung des Klebstoffs. Ferner benötigt der erfindungsgemäße Verfahrensablauf nur eine kurze Zeit und ermöglicht somit einen hohen Produktdurchsatz.

Zweckmäßigerweise wird die Beaufschlagung mit der äußeren Kraft nach Beendigung der Erwärmung für eine vorbestimmte, zur dauerhaften Stabilisierung der stoffschlüssigen Verbindung ausreichende Zeit aufrechterhalten. Diese Zeit kann ebenso wie die zur Erreichung der ausreichenden Temperatur bei der Erwärmung benötigte Zeit ohne weiteres anhand von Versuchen ermittelt werden.

Die Erwärmung des Schleifstücks erfolgt vorzugsweise induktiv durch Einwirkung eines magnetischen Wechselfeldes. Diese Art der Erwärmung macht sich die Tatsache zunutze, dass das Schleifstück aufgrund seiner Funktion eine hohe elektrische Leitfähigkeit hat, und erlaubt eine rasche Erwärmung ohne mechanische Berührung des Schleifstücks. Die Erwärmung des Schleifstücks kann jedoch auch auf andere Weise, wie durch mechanischen Kontakt mit mindestens einem erwärmten Körper, erfolgen.

Der Hohlraum in dem Schleifstückhalter hat bevorzugt die Form einer Nut mit zwei zueinander parallelen Längsseiten, deren Länge ein Vielfaches ihres Abstandes beträgt, und die Hauptrichtung der auf das Schleifstück gerichteten äußeren Kraft verläuft senkrecht zu den Längsseiten der Nut. Auf diese Weise steht eine große Fläche für die Herstellung der stoffschlüssigen Verbindung zwischen dem Schleifstück und dem Schleifstückhalter zur Verfügung.

Die Beaufschlagung des Schleifstückhalters mit der auf das Schleifstück gerichteten äußeren Kraft erfolgt bevorzugt an einer oder mehreren einzelnen Stellen entlang des Schleifstückhalters. Bei einer induktiven Erwärmung des Schleifstücks kommt es an diesen Stellen zu einer zu einer besseren Wärmeübertragung auf den Schleifstückhalter und folglich zu einer rascheren Erweichung des aus einem Kunststoff bestehenden Schleifstückhalters als abseits dieser Stellen, wodurch die Entstehung einer stoffschlüssigen Verbindung an diesen Stellen besonders begünstigt wird. Damit besteht an diesen Stellen eine mit einer Punktschweißung vergleichbare Konfiguration. Alternativ hierzu kann die Beaufschlagung des Schleifstückhalters mit der auf das Schleifstück gerichteten äußeren Kraft aber auch flächenhaft entlang der gesamten Nut des Schleifstückhalters erfolgen, wenn eine gleichmäßige Verbindung entlang der gesamten Länge der Nut erzeugt werden soll.

Die Erwärmung des Schleifstücks erfolgt vorzugsweise an einem aus der Nut in dem Schleifstückhalter herausragenden Abschnitt des Schleifstücks. Auf diese Weise geschieht die Einkopplung von Leistung zur Erwärmung abseits des Bereiches, in dem die mechanische Klemmung des Schleifstücks in dem Schleifstückhalter erfolgt, so dass den zur Einkopplung der Leistung vorgesehenen Komponenten keine Klemmbacken störend im Weg stehen. Somit ist bei einer induktiven Erwärmung ein geringer Abstand zwischen der elektromagnetischen Induktionsvorrichtung und dem Schleifstück möglich, der einen hohen Wirkungsgrad der Leistungseinkopplung gewährleistet. Bei einer Erwärmung durch mechanischen Kontakt mit einem erwärmten Körper kann dieser ungehindert an den zu kontaktierenden Abschnitt des Schleifstücks herangeführt werden.

Die Erwärmung des Schleifstücks erfolgt vorzugsweise an einer oder mehreren einzelnen Stellen entlang der Nut des Schleifstückhalters. Dies ermöglicht eine gezielte örtliche Konzentration der Leistungseinkopplung zur Optimierung des Fügevorgangs. Alternativ hierzu kann die Erwärmung des Schleifstücks aber auch flächenhaft entlang der gesamten Nut des Schleifstückhalters erfolgen, wenn eine gleichmäßige Verbindung entlang der gesamten Länge der Nut erzeugt werden soll.

Bevorzugt erfolgt sowohl die Beaufschlagung des Schleifstückhalters mit der auf das Schleifstück gerichteten äußeren Kraft, als auch die Erwärmung des Schleifstücks an einer gleichen Stelle oder an mehreren jeweils gleichen einzelnen Stellen entlang der Nut des Schleifstückhalters. Hierdurch wird eine stoffschlüssige Verbindung gezielt an einer oder mehreren vorbestimmten Stellen begünstigt und es wird Leistung genau dort eingekoppelt, wo sie für den Fügevorgang benötigt wird. Somit kann die insgesamt eingekoppelte Energie minimiert werden, was eine rasche Abkühlung nach dem Ende der Erwärmung begünstigt und für eine geringe Dauer des Fügevorgangs sorgt.

Bei dem Verfahren kann vorteilhaft in Schritt c) das Erwärmen des Schleifstücks auf eine zur Entstehung einer stoffschlüssigen Verbindung mit dem Schleifstückhalter ausreichende Temperatur konkreter dadurch erfolgen, dass das Schleifstück auf eine zur Entstehung einer stoffschlüssigen Verbindung zwischen den durch die Klemmkraft aneinandergedrückten Oberflächen des Schleifstückhalters und des Schleifstücks ausreichende Temperatur erwärmt wird.

Eine weitere Ausprägung der Erfindung besteht in einem Stromabnehmerkopf für einen Stromabnehmer, bestehend aus einem elektrisch leitfähigen Schleifstück und einem elektrisch isolierenden Schleifstückhalter, der mittels des erfindungsgemäßen Verfahrens hergestellt ist. Bevorzugt kann der elektrisch isolierende Schleifstückhalter aus thermoplastischem Kunststoff bestehen.

Nachfolgend wird ein Ausführungsbeispiel der Erfindung unter Bezugnahme auf die Zeichnungen beschrieben. Es zeigt
- Fig. 1: eine Seitenansicht eines erfindungsgemäß hergestellten Stromabnehmerkopfes,
- Fig. 2: eine Frontansicht des Stromabnehmerkopfes von Fig. 1,
- Fig. 3: eine Schnittansicht des Stromabnehmerkopfes von Fig. 1 entlang der Linie B-B mit Klemmbacken und Induktionsspulen und
- Fig. 4: eine Draufsicht auf den Stromabnehmerkopf von Fig. 1 mit Klemmbacken und Induktionsspulen und
- Fig. 5: eine Schnittansicht des Stromabnehmerkopfes von Fig. 1 entlang der Linie B-B mit Klemmbacken und Erwärmungsbacken.

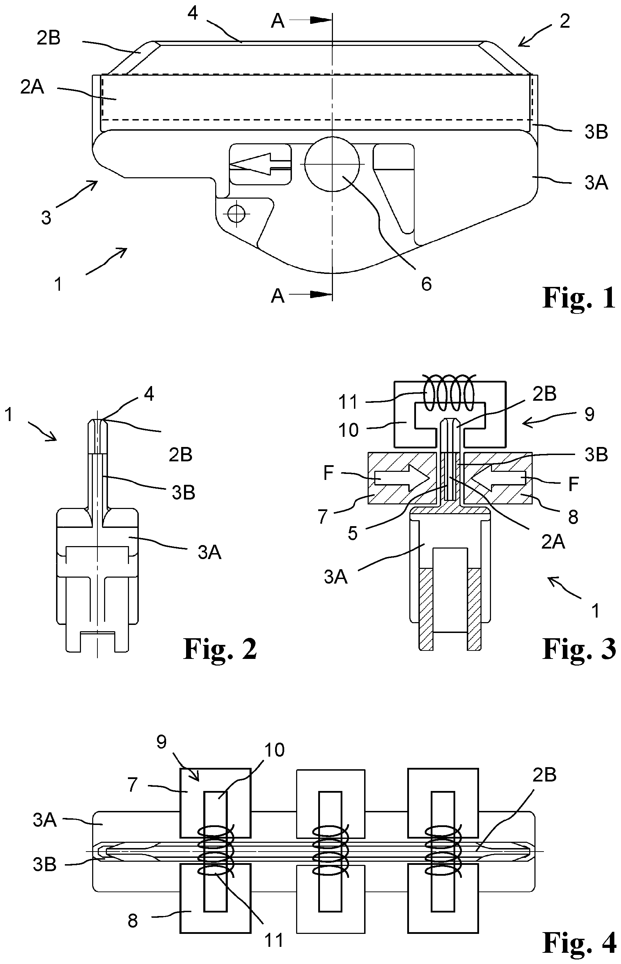

Fig. 1 und 2 zeigen einen mittels des erfindungsgemäßen Verfahrens hergestellten Stromabnehmerkopf 1, der sich aus einem elektrisch leitenden Schleifstück 2 und einem elektrisch isolierenden Schleifstückhalter 3 zusammensetzt. Die Oberseite 4 des Schleifstücks 2 ist dazu bestimmt, im Betrieb an einer Stromschiene einer Schleifleitung entlang zu schleifen. Ein unterer, in Fig. 1 mit gestrichelten Linien skizzierter Abschnitt 2A des Schleifstücks 2 ist in dem Schleifstückhalter 3 in einer an dessen Oberseite ausgebildeten Nut 5 aufgenommen, die in der Schnittansicht von Fig. 3 erkennbar ist. Der Schleifstückhalter 3 hat in der Frontansicht einen schmalen oberen Abschnitt 3B und einen wesentlich breiteren unteren Abschnitt 3A, wobei sich die Ortsangaben "unten" und "oben" lediglich auf die Darstellung in den Figuren 1 bis 3 und nicht auf die räumliche Orientierung des Stromabnehmerkopfes 1 im Betrieb am Stromabnehmer eines Schleifleitungssystems beziehen.

Ein oberer Abschnitt 2B des Schleifstücks 2 ragt aus dem oberen Abschnitt 3B des Schleifstückhalters 3 nach oben heraus. Der Stromabnehmerkopf 1 ist im Betrieb an einem Stromabnehmer eines Fahrzeugs, welches durch eine Schleifleitung mit Strom versorgt wird, mittels eines durch eine Bohrung 6 in dem unteren Abschnitt 3A des Schleifstückhalters 3 ragenden Stifts befestigt, so dass er sich um einen vorbestimmten Winkel um die Mittelachse der Bohrung 6 drehen kann. Die Bewegungsrichtung des Stromabnehmerkopfes 1 entlang der Stromschiene einer Schleifleitung im Betrieb entspricht der Richtung des links neben der Bohrung 6 sichtbaren Pfeils in Fig. 1 oder der dazu entgegengesetzten Richtung.

Die Nut 5 ist im Querschnitt so breit, dass der untere Abschnitt 2A des Schleifstücks 2 von oben in sie eingeführt werden kann und sich die einander gegenüberliegenden Längsseiten der Nut 5 in Kontakt mit den Längsseiten des unteren Abschnitts 2A des Schleifstücks 2 befinden. An einer Stelle weist der Grund der Nut 5 eine bis zur Unterseite des Schleifstückhalters 3 reichende Öffnung auf, durch welche ein an dem Schleifstück 2 ausgebildeter Steckverbinder, der zum Anschluss eines Kabels geeignet ist, in Richtung der Unterseite des Schleifstückhalters 3 ragt. Dieser Steckverbinder ist in den Figuren nicht sichtbar und für die Erfindung nicht von Bedeutung.

Um das Schleifstück 2 an dem Schleifstückhalter 3 zu befestigen, werden entsprechend der Darstellung in den Figuren 3 und 4 nach dem Einführen des unteren Abschnitts 2A des Schleifstücks 2 in die Nut 5 in dem oberen Abschnitt 3B des Schleifstückhalters 3 mittels mehrerer einander jeweils gegenüberliegender Klemmbacken 7 und 8 seitliche Klemmkräfte F in einander entgegengesetzter Richtung auf den oberen Abschnitt 3B des Schleifstückhalters 3 in Richtung des unteren Abschnitts 2A des Schleifstücks ausgeübt, wodurch die Längsseiten der Nut 5 gegen die Längsseiten des unteren Abschnitts 2A des Schleifstücks 2 gedrückt werden und das Schleifstück 2 auf diese Weise in dem Schleifstückhalter 3 fixiert wird.

Anschließend wird bei der in den Figuren 3 und 4 veranschaulichten Ausführungsform der Erfindung eine Anordnung von Induktoren 9 in Form jeweils einer Kombination eines Magnetkerns 10 aus ferromagnetischem Material mit einer Spule 11 an dem oberen Abschnitt 2B des Schleifstücks 2 so angeordnet, dass die bei einer Bestromung der Spulen 11 mit einem Wechselstrom von den Spulen 11 erzeugten magnetischen Wechselfelder den oberen Abschnitt 2B des Schleifstücks 2 durchdringen. Bei dem in den Figuren 3 und 4 gezeigten Ausführungsbeispiel handelt es sich bei den Magnetkernen 10 um weitgehend geschlossene C-förmige Kerne mit einem Luftspalt, der etwas breiter ist als der obere Abschnitt 2B des Schleifstücks 2, so dass dieser in lateraler Richtung in den Luftspalt passt und beidseitig noch ein Abstand zwischen dem Schleifstück 2 und dem Magnetkern 10 besteht. Die Induktoren werden also dem Schleifstück 2 so angenähert, dass die Magnetkerne 10 dessen oberen Abschnitt 2B umgreifen.

Durch die von den magnetischen Wechselfeldern in dem leitfähigen Schleifstück 2 erzeugten elektrischen Wirbelströme kommt es zu einer Erwärmung zunächst des oberen Abschnitts 2B des Schleifstücks 2, die sich infolge der hohen Wärmeleitfähigkeit des Schleifstücks 2 rasch auch in dessen unteren Abschnitt 2A, insbesondere in die Bereiche unmittelbar unterhalb der Magnetkerne 10 ausbreitet. Die Stromstärke und die Dauer der Bestromung der Spulen 11 ist so gewählt, dass es durch die Erwärmung zu einer Erweichung des oberen Abschnitts 3B des aus einem thermoplastischen Kunststoff bestehenden Schleifstückhalters 3 an den Längsseiten der Nut 5 kommt und eine stoffschlüssige Verbindung zwischen den durch die Klemmkräfte F aneinandergedrückten Oberflächen des Schleifstückhalters 3 und des Schleifstücks 2 entsteht. Nach dem Ende der Bestromung der Spulen 11 erfolgt eine Abkühlung und dabei eine Verfestigung der entstandenen Verbindung zwischen dem Schleifstück 2 und dem Schleifstückhalter 3. Hierbei ist es zweckmäßig, wenn die Klemmkraft nach dem Ende der Bestromung für eine für besagte Verfestigung ausreichende Zeit aufrechterhalten wird.

Bei dem gezeigten Ausführungsbeispiel sind gemäß Fig. 4 entlang des oberen Abschnitts 2B des Schleifstücks 2 drei Induktoren 9 und entlang des oberen Abschnitts 3B des Schleifstückhalters 3 drei Paare von Klemmbacken 7 und 8 jeweils äquidistant so angeordnet, dass sich ein Induktor 9 und ein Klemmbackenpaar 7, 8 jeweils an derselben Position bezüglich der gemeinsamen Längsrichtung der Schleifstücks 2 und des Schleifstückhalters 3 befinden. Hierdurch werden die Klemmkräfte F in denjenigen Kontaktbereich zwischen dem Schleifstück 2 und dem Schleifstückhalter 3 eingeleitet, welcher dem Bereich der Einleitung der Wärmeleistung in das Schleifstück 2 am nächsten liegt.

Die in Fig. 3 dargestellte Anzahl von drei Induktoren 9 und drei Klemmbackenpaaren 7, 8 hat rein beispielhaften Charakter. Es würde grundsätzlich auch ein Induktor 9 und ein Klemmbackenpaar 7, 8 ausreichen, um eine stoffschlüssige Befestigung des Schleifstücks 2 an dem Schleifstückhalter 3 an einer Stelle zu bewirken, aber es könnten auch mehr als die in Fig. 4 gezeigte Anzahl von drei Induktoren 9 und drei Klemmbackenpaaren 7, 8 verwendet werden. Ebenso könnte ein einziges größeres Klemmbackenpaar 7, 8 und ein einziger größerer Induktor 9, die sich jeweils entlang eines signifikanten Teils der Länge des Schleifstücks 2 und des Schleifstückhalters 3 erstrecken, verwendet werden.

Die C-Form des Induktors 9 ist zwar eine zweckmäßige Form, jedoch keineswegs die einzige mögliche Form. Ferner muss auch die räumliche Orientierung des Stromabnehmerkopfes 1, der Klemmbacken 7, 8 und des Induktors 9 während des thermischen Fügevorgangs nicht der Anordnung gemäß Fig. 3 entsprechen, sondern die gesamte Anordnung könnte beispielsweise auch um 180 Grad gedreht sein. In diesem Fall könnte der Induktor 9 so gestaltet sein, dass er ein als Unterlage fungierendes Gehäuse hat, auf dem die miteinander zu verbindenden Komponenten des Stromabnehmerkopfes 1 zunächst im zusammengesteckten Zustand abgelegt werden, und durch das sie in einer definierten Stellung gehalten werden, bevor sie mittels der Klemmbacken 7, 8 aneinander fixiert werden.

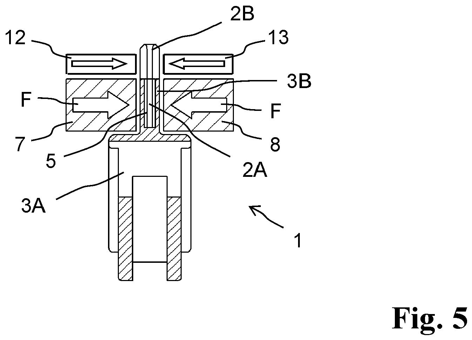

Eine andere Ausführungsform der Erfindung veranschaulicht Fig. 5 anhand einer Ansicht eines Stromabnehmerkopfes wie in Fig. 3. Mit Fig. 3 übereinstimmende Komponenten sind in Fig. 5 mit den gleichen Bezugszahlen wie in Fig. 3 gekennzeichnet. Der einzige Unterschied gegenüber der Anordnung von Fig. 3 besteht hier darin, dass anstelle der dortigen Induktoren 9 zur Erwärmung des Schleifstücks 2 ein zusätzliches Klemmbackenpaar 12, 13 vorgesehen ist, welches bei dieser Ausführungsform als Wärmequelle zur Erwärmung des Schleifstücks 2 fungiert. Hierzu wird das zusätzliche Klemmbackenpaar 12, 13 zunächst auf eine vorbestimmte Temperatur erwärmt und dann durch eine Bewegung in der in Fig. 5 durch Pfeile gekennzeichneten Richtung in Kontakt mit dem oberen Abschnitt 2B des Schleifstücks 2 versetzt und gegen diesen gedrückt, wodurch das Schleifstück 2 ausgehend von den im Kontakt mit dem zusätzlichen Klemmbackenpaar 12, 13 befindlichen Bereichen der Oberfläche des oberen Abschnitts 2B aus erwärmt wird.

Diese Erwärmung breitet sich ebenso wie die induktive Erwärmung bei der ersten Ausführungsform vertikal nach unten in den unteren Abschnitt 2A des Schleifkörpers 2 aus. Durch die Beaufschlagung des oberen Abschnitts 3B des Schleifstückhalters 3 mit einer gegen den unteren Abschnitt 2A des Schleifstücks 2 gerichteten Klemmkraft F durch das erste Klemmbackenpaar 7, 8 wird wie bei der ersten Ausführungsform eine stoffschlüssige Verbindung zwischen dem oberen Abschnitt 3B des Schleifstückhalters 3 und dem unteren Abschnitt 2A des Schleifstücks 2 bewirkt. Der Unterschied zu der ersten Ausführungsform besteht also nur in einem anderen Ursprung der Erwärmung des Schleifstücks 2.

Ebenso wie bei der ersten Ausführungsform kann die Erwärmung des oberen Abschnitts 2B auch bei der zweiten Ausführungsform sowohl punktuell an einer oder mehreren Stellen entlang des Schleifstücks 2 oder flächenhaft entlang der gesamten Länge des Schleifstücks 2 erfolgen. Dies kann durch eine entsprechende Anordnung und Formgebung eines oder mehrerer erwärmter zusätzlicher Klemmbackenpaare 12, 13 analog zur Anordnung eines oder mehrerer Induktoren 9 bei der ersten Ausführungsform realisiert werden. Die Erwärmung des oder der zusätzlichen Klemmbackenpaare 12, 13 kann beispielsweise elektrisch durch in die zusätzlichen Klemmbacken 12 und 13 eingebettete Heizdrähte, wie sie bei Heizplatten elektrischer Kochherde verwendet werden, erfolgen. Weitere denkbare Arten der Erwärmung der zusätzlichen Klemmbacken 12 und 13 wären jeweilige Kanäle in den zusätzlichen Klemmbacken 12 und 13, durch welche eine erwärmte Flüssigkeit geleitet wird, oder eine gezielte Bestrahlung der zusätzlichen Klemmbacken 12 und 13 durch eine Infrarot-Strahlungsquelle.

In den Ausführungsbeispielen sind jeweils zwei Klemmbacken 7 und 8 auf entgegengesetzten Seiten des oberen Abschnitts 3B des Schleifstückhalters 3 vorgesehen, die jeweils eine gleiche Kraft F, also insgesamt zwei Kräfte in einander entgegengesetzten Richtungen auf den oberen Abschnitt 3B ausüben und den in diesen eingesteckten unteren Abschnitt 2A des Schleifstücks 2 dort festklemmen, was eine bevorzugte Lösung der Klemmung ist. Grundsätzlich könnte aber auch nur eine Kraft F durch eine einzige bewegliche Klemmbacke 7 oder 8 von einer Seite aus auf den oberen Abschnitt 3B des Schleifstückhalters 3 ausgeübt werden und dieser auf seiner anderen Seite gegen eine unbewegliche Halterung gedrückt werden.

### Bezugszeichenliste

- 1: Stromabnehmerkopf
- 2: elektrisch leitendendes Schleifstück
- 2A: unterer Abschnitt des Schleifstücks
- 2B: oberer Abschnitt des Schleifstücks
- 3: elektrisch isolierender Schleifstückhalter
- 3A: unterer Abschnitt des Schleifstückhalters
- 3B: oberer Abschnitt des Schleifstückhalters
- 4: Oberseite des Schleifstücks
- 5: Nut
- 6: Bohrung
- 7: Klemmbacke
- 8: Klemmbacke
- 9: Induktoren
- 10: Magnetkern
- 11: Spule
- F: Klemmkräfte

## Patentansprüche

1. Verfahren zur Herstellung eines aus einem elektrisch leitfähigen Schleifstück (2) und einem elektrisch isolierenden Schleifstückhalter (3) bestehenden Stromabnehmerkopfes (1) für einen Stromabnehmer, **gekennzeichnet durch** folgende Schritte:
a) Einführen eines Abschnitts (2A) des Schleifstücks (2) in einen passend zu diesem Abschnitt (2A) dimensionierten, nach außen offenen Hohlraum in dem Schleifstückhalter (3);
b) Klemmen des Schleifstücks (2) in dem Hohlraum des Schleifstückhalters (3) durch Beaufschlagung des Schleifstückhalters (3) mit mindestens einer auf den eingeführten Abschnitt (2A) des Schleifstücks (2) gerichteten äußeren Kraft;
c) Erwärmen des Schleifstücks (2) auf eine zur Entstehung einer stoffschlüssigen Verbindung mit dem Schleifstückhalter (3) ausreichende Temperatur;
d) Abkühlen des aus Schleifstück (2) und Schleifstückhalter (3) gebildeten Stromabnehmerkopfes (1).

2. Verfahren nach Anspruch 1, **dadurch gekennzeichnet, dass** die Beaufschlagung mit der äußeren Kraft nach Beendigung der Erwärmung für eine vorbestimmte, zur dauerhaften Stabilisierung der stoffschlüssigen Verbindung ausreichende Zeit aufrechterhalten wird

3. Verfahren nach Anspruch 1 oder 2, **dadurch gekennzeichnet, dass** die Erwärmung des Schleifstücks (2) induktiv durch Einwirkung eines magnetischen Wechselfeldes erfolgt.

4. Verfahren nach Anspruch 1 oder 2, **dadurch gekennzeichnet, dass** die Erwärmung des Schleifstücks (2) durch mechanischen Kontakt mit mindestens einem erwärmten Körper (12, 13) erfolgt.

5. Verfahren nach einem der Ansprüche 1 bis 4, **dadurch gekennzeichnet, dass** der Hohlraum in dem Schleifstückhalter (3) die Form einer Nut (5) mit zwei zueinander parallelen Längsseiten, deren Länge ein Vielfaches ihres Abstandes beträgt, hat, und dass die Hauptrichtung der auf das Schleifstück (3) gerichteten äußeren Kraft senkrecht zu den Längsseiten der Nut (5) verläuft.

6. Verfahren nach Anspruch 5, **dadurch gekennzeichnet, dass** die Beaufschlagung des Schleifstückhalters (3) mit der auf das Schleifstück (2) gerichteten äußeren Kraft an einer oder mehreren einzelnen Stellen entlang der Nut (5) des Schleifstückhalters (3) erfolgt.

7. Verfahren nach Anspruch 5, **dadurch gekennzeichnet, dass** die Beaufschlagung des Schleifstückhalters (3) mit der auf das Schleifstück (2) gerichteten äußeren Kraft flächenhaft entlang der gesamten Nut (5) des Schleifstückhalters (3) erfolgt.

8. Verfahren nach einem der Ansprüche 5 bis 7, **dadurch gekennzeichnet, dass** die Erwärmung des Schleifstücks (2) an einem aus der Nut (5) in dem Schleifstückhalter (3) herausragenden Abschnitt (2B) des Schleifstücks (2) erfolgt.

9. Verfahren nach einem der Ansprüche 5 bis 8, **dadurch gekennzeichnet, dass** die Erwärmung des Schleifstücks (2) an einer oder mehreren einzelnen Stellen entlang der Nut (5) des Schleifstückhalters (3) erfolgt.

10. Verfahren nach einem der Ansprüche 5 bis 8, **dadurch gekennzeichnet, dass** die Erwärmung des Schleifstücks (2) flächenhaft entlang der gesamten Nut (5) des Schleifstückhalters (3) erfolgt.

11. Verfahren nach einem der Ansprüche 6 oder 9, **dadurch gekennzeichnet, dass** sowohl die Beaufschlagung des Schleifstückhalters (3) mit der auf das Schleifstück (2) gerichteten äußeren Kraft, als auch die Erwärmung des Schleifstücks (2) an einer gleichen Stelle oder an mehreren jeweils gleichen einzelnen Stellen bezüglich der Längsrichtung der Nut (5) des Schleifstückhalters (3) erfolgt.

12. Verfahren nach einem der voranstehenden Ansprüche, **dadurch gekennzeichnet, dass** in Schritt c) das Schleifstück (2) auf eine zur Entstehung einer stoffschlüssigen Verbindung zwischen den durch die Klemmkraft aneinandergedrückten Oberflächen des Schleifstückhalters (3) und des Schleifstücks (2) ausreichende Temperatur erwärmt wird.

13. Verfahren nach einem der voranstehenden Ansprüche, **dadurch gekennzeichnet, dass** der elektrisch isolierende Schleifstückhalter (3) aus thermoplastischem Kunststoff besteht.

14. Stromabnehmerkopf (1) für einen Stromabnehmer, bestehend aus einem elektrisch leitfähigen Schleifstück (2) und einem elektrisch isolierenden Schleifstückhalter (3), **dadurch gekennzeichnet, dass** er mittels eines Verfahrens nach einem der Ansprüche 1 bis 13 hergestellt ist.

15. Stromabnehmerkopf (1) nach Anspruch 14, **dadurch gekennzeichnet, dass** der elektrisch isolierende Schleifstückhalter (3) aus thermoplastischem Kunststoff besteht.

## Claims

1. Method for manufacturing a current collector head (1) for a current collector having an electrically conductive sliding contact (2) and an electrically insulating sliding contact holder (3), **characterized by** the following steps:
a) Inserting a section (2A) of the sliding contact (2) into an outwardly open cavity in the sliding contact holder (3) that is dimensioned to match this section (2A);
b) Clamping the sliding contact (2) in the cavity of the sliding contact holder (3) by acting on the sliding contact holder (3) with at least an external force directed onto the inserted section (2A) of the sliding contact (2);
c) Heating the sliding contact (2) to a temperature sufficient to form a material bond connection with the sliding contact holder (3);
d) Cooling the current collector head (1) formed from the sliding contact (2) and the sliding contact holder (3).

2. Method according to claim 1, **characterized in that** the action of the external force is maintained for a predetermined time, sufficient for permanent stabilization of the material bond connection, after completion of the heating.

3. Method according to claim 1 or 2, **characterized in that** the heating of the sliding contact (2) occurs inductively by the action of an alternating magnetic field.

4. Method according to claim 1 or 2, **characterized in that** the heating of the sliding contact (2) occurs by mechanical contact with at least one heated body (12, 13).

5. Method according to any one of claims 1 to 4, **characterized in that** the cavity in the sliding contact holder (3) is in the form of a groove (5) with two longitudinal sides parallel to each other, the length of which is a multiple of a spacing between the sides, and wherein a main direction of the external force directed at the sliding contact holder (3) is perpendicular to the longitudinal sides of the groove (5).

6. Method according to claim 5, **characterized in that** the action of the external force on the sliding contact holder (3) directed onto the sliding contact (2) occurs on one or several individual positions along the groove (5) of the sliding contact holder (3).

7. Method according to claim 5, **characterized in that** the action of the external force on the sliding contact holder (3) directed onto the sliding contact (2) occurs extensive along the entire groove (5) of the sliding contact holder (3).

8. Method according to any one of claims 5 to 7, **characterized in that** the heating of the sliding contact (2) occurs on a section (2B) of the sliding contact (2) protruding from the groove (5) in the sliding contact holder (3).

9. Method according to one of the claims 5 to 8, **characterized in that** the heating of the sliding contact (2) occurs on one or several individual positions along the groove (5) of the sliding contact holder (3).

10. Method according to one of the claims 5 to 8, **characterized in that** the heating of the sliding contact (2) occurs extensive along the entire groove (5) of the sliding contact holder (3).

11. Method according to one of claims 6 or 9, **characterized in that** both the action of the external force on the sliding contact holder (3) directed onto the sliding contact (2), as well as the heating of the sliding contact (2) occur on an identical position or several identical individual positions relative to the longitudinal direction of the groove (5) of the sliding contact holder (3).

12. Method according to one of the preceding claims, **characterized in that** in step c) the sliding contact (2) is heated to a temperature sufficient to produce a material bond connection between the surfaces of the sliding contact holder (3) and the sliding contact (2) pressed against each other by the clamping force.

13. Method according to one of the preceding claims, **characterized in that** the electrically insulating sliding contact holder (3) is made of thermoplastic material.

14. Current collector head (1) for a current collector, consisting of an electrically conductive sliding contact (2) and an electrically insulating sliding contact holder (3), **characterized in that** it is produced by means of a method according to one of claims 1 to 13.

15. Current collector head (1) according to claim 14, **characterized in that** the electrically insulating sliding contact holder (3) is made of thermoplastic material.

## Revendications

1. Procédé de fabrication d'une tête de pantographe (1) pour un pantographe constituée d'une semelle d'archet de pantographe (2) électriquement conductrice et d'un porte-semelle d'archet de pantographe (3) électriquement isolant, **caractérisé par** des étapes suivantes :
a) d'introduction dans le porte-semelle d'archet de pantographe (3) d'un segment (2A) de la semelle d'archet de pantographe (2) dans un espace creux ouvert vers l'extérieur, dimensionné de manière adaptée audit segment (2A) ;
b) de serrage de la semelle d'archet de pantographe (2) dans l'espace creux du porte-semelle d'archet de pantographe (3) en soumettant le porte-semelle d'archet de pantographe (3) à l'action d'au moins une force extérieure dirigée sur le segment (2A) introduit de la semelle d'archet de pantographe (2) ;
c) de chauffage de la semelle d'archet de pantographe (2) à une température suffisante pour créer une liaison par liaison de matière au porte-semelle d'archet de pantographe (3) ;
d) de refroidissement de la tête de pantographe (1) formée à partir de la semelle d'archet de pantographe (2) et du porte-semelle d'archet de pantographe (3).

2. Procédé selon la revendication 1, **caractérisé en ce que** l'action exercée par la force extérieure est maintenue à la fin du chauffage pendant une durée prédéfinie suffisante pour stabiliser de manière prolongée la liaison par liaison de matière.

3. Procédé selon la revendication 1 ou 2, **caractérisé en ce que** le chauffage de la semelle d'archet de pantographe (2) est effectué par induction par l'effet d'un champ alternatif magnétique.

4. Procédé selon la revendication 1 ou 2, **caractérisé en ce que** le chauffage de la semelle d'archet de pantographe (2) est effectué par le contact mécanique avec au moins un corps (12, 13) chauffé.

5. Procédé selon l'une quelconque des revendications 1 à 4, **caractérisé en ce que** l'espace creux dans le porte-semelle d'archet de pantographe (3) a la forme d'une rainure (5) avec deux côtés longitudinaux parallèles l'un à l'autre, dont la longueur est un multiple de sa distance, et que la direction principale de la force extérieure dirigée sur la semelle d'archet de pantographe (3) s'étend de manière perpendiculaire par rapport aux côtés longitudinaux de la rainure (5).

6. Procédé selon la revendication 5, **caractérisé en ce que** l'action exercée sur le porte-semelle d'archet de pantographe (3) par la force extérieure dirigée sur la semelle d'archet de pantographe (2) est effectuée sur un ou plusieurs divers emplacements le long de la rainure (5) du porte-semelle d'archet de pantographe (3).

7. Procédé selon la revendication 5, **caractérisé en ce que** l'action exercée sur le porte-semelle d'archet de pantographe (3) par la force extérieure dirigée sur la semelle d'archet de pantographe (2) est effectuée à plat le long de la rainure (5) totale du porte-semelle d'archet de pantographe (3).

8. Procédé selon l'une quelconque des revendications 5 à 7, **caractérisé en ce que** le chauffage de la semelle d'archet de pantographe (2) est effectué sur un segment (2B) de la semelle d'archet de pantographe (2) dépassant de la rainure (5) dans le porte-semelle d'archet de pantographe (3).

9. Procédé selon l'une quelconque des revendications 5 à 8, **caractérisé en ce que** le chauffage de la semelle d'archet de pantographe (2) est effectué sur un ou plusieurs emplacements individuels le long de la rainure (5) du porte-semelle d'archet de pantographe (3) .

10. Procédé selon l'une quelconque des revendications 5 à 8, **caractérisé en ce que** le chauffage de la semelle d'archet de pantographe (2) est effectué à plat le long de la totalité de la rainure (5) du porte-semelle d'archet de pantographe (3).

11. Procédé selon l'une quelconque des revendications 6 ou 9, **caractérisé en ce qu'**à la fois l'action exercée sur le porte-semelle d'archet de pantographe (3) par la force extérieure dirigée sur la semelle d'archet de pantographe (2) ainsi que le chauffage de la semelle d'archet de pantographe (2) sont effectués sur un emplacement identique ou sur plusieurs emplacements individuels respectivement identiques par rapport à la direction longitudinale de la rainure (5) du porte-semelle d'archet de pantographe (3).

12. Procédé selon l'une quelconque des revendications précédentes, **caractérisé en ce que** lors de l'étape c), la semelle d'archet de pantographe (2) est chauffée à une température suffisante pour créer une liaison par liaison de matière entre les surfaces pressées les unes contre les autres par la force de serrage du porte-semelle d'archet de pantographe (3) et de la semelle d'archet de pantographe (2).

13. Procédé selon l'une quelconque des revendications précédentes, **caractérisé en ce que** le porte-semelle d'archet de pantographe (3) électriquement isolant est constitué de matière synthétique thermoplastique.

14. Tête de pantographe (1) pour un pantographe, constituée d'une semelle d'archet de pantographe (2) électriquement conductrice et d'un porte-semelle d'archet de pantographe (3) électriquement isolant, **caractérisée en ce qu'**elle est fabriquée au moyen d'un procédé selon l'une quelconque des revendications 1 à 13.

15. Tête de pantographe (1) selon la revendication 14, **caractérisée en ce que** le porte-semelle d'archet de pantographe (3) électriquement isolant est constitué de matière synthétique thermoplastique.
